# EUROPEAN PATENT SPECIFICATION

(11) **EP 4 608 709 B1**
(45) Date of publication and mention of the grant of the patent: **25.11.2026**
(21) Application number: 23751688.5
(22) Date of filing: 25.07.2023
(51) Int. Cl.: B63B 3/08

(54) **MODULAR SWATH VESSEL**
MODULARES SCHWADENSCHIFF
NAVIRE SWATH MODULAIRE

(30) Priority: 25.10.2022 GB 202215799
(43) Date of publication of application: 03.09.2025
(73) Proprietor: ACUA OCEAN LIMITED, Plymouth PL9 9RQ (GB)
(72) Inventor: TINMOUTH, Neil, Plymouth, PL9 9RQ (GB); KECSMAR, John, Plymouth, PL9 9RQ (GB)
(74) Representative: The IP Asset Partnership Limited
(86) International application number: PCT/GB2023/051965
(87) International publication number: WO 2024/089381

(56) References cited:
- EP-B1- 0 945 336
- WO-A1-2015/151983
- WO-A2-2022/118185
- FR-A1- 2 581 958
- JP-A- 2022 158 763
- US-A- 3 730 123

## Description

### Field

The present invention relates to a small water plane area twin hull (SWATH) vessel. More particularly, the present invention relates to a modular SWATH vessel and more particularly still a hydrogen fuel powered, modular SWATH vessel. For example, WO 2022/118185 A2 shows a SWATH vessel, wherein the struts are not reversibly connected to the submerged hulls nor to the cross structures.

### Background

Small Waterplane Area Twin Hull (SWATH) vessels are buoyantly supported water born vehicles or vessels with most of the buoyancy provided by two more lower hulls completely submerged below the water surface. Normally the lower hulls are situated at either side of the vessel, one on the port or left side and the other on the starboard or right side. One or more struts per side connect each of these hulls to the main vessel structure which is located well above the water surface and extends laterally between the struts from left and right lower hulls. The struts are slender in comparison to the lower hulls, located at their base and pass from the lower hulls through the water surface to the main vessel structure.

The lower hulls, also called "demi-hulls", can be torpedo shaped bodies, providing a compromise between ease of production and hydrodynamic efficiency. Lower hulls are generally prismatic in nature, varying in section along their length. Typically, the hulls may range from being circular in cross-section to simpler, relatively rectangular forms.

A strut extends upwards from the respective lower hull to the main vessel structure and may be vertical or near vertical. There may be one or two (tandem) struts associated with each lower hull. The strut, or struts, transfer buoyancy force from the lower hull and additionally contribute a small amount of buoyancy themselves. Struts are a structural member designed to have a hydrodynamically efficient small waterplane area. A small water plane area meaning that the cross section of the strut and the frontal area presented to the water is small.

The main vessel structure is typically a single box-like structure that spans the port and starboard sets of struts and provides the internal and external deck areas relevant to the operational function of the vessel.

The main vessel structure may have one or more internal decks, with an upper "weather" deck surface, and a lower "wet" deck surface, both of which are also serve a structural function for the vessel structure.

The main vessel structure may include an aperture extending through the lower deck and one or more other decks known as a moonpool traditionally due to the limitations of a normal SWATH vessel the size of the moonpool is small relative to the total deck size as they compromise structural integrity and other vessel functions must be accommodated. A moonpool provides access to the water for machinery or equipment such as remotely operated vehicles released using a launch and recovery system (LARS).

Traditional SWATH vessels may also have a superstructure and/or deckhouse positioned on top of the main vessel structure. Equipment is distributed between the main vessel structure, the superstructure and the deck house.

Traditionally vessels are assembled and completed at a shipyard as a complete unit for subsequent transport and commissioning. As a result, vessels design and construction involve permanently assembling the different sections at the shipyard where they are constructed. Once complete vessels are normally launched directly from the ship yard into a river or onto the sea and then either transported by sea either under their own power or loaded onto larger transport vessel. If small enough a vessel may be transported by trailer to a deployment site. However, the size and weight of vessel that this is possible for is very limited and often not suitable for open ocean. Larger vessels that are not be transportable by road have longer transit times and higher costs associated with mobilisation to site. SWATH vessels by their very nature tend to have a larger beam than a monohull vessel of a similar weight or capacity which makes them particularly challenging to move by road. This is a particular issue for SWATH vessels that are suited to specialist work which often occurs in geographically diverse locations. This applies to both first delivery of the vessel but also for operations where the vessel is required to be deployed at various different locations around the world. The costs of transporting large vessels, and in particular SWATH vessels, means that they are often operate within a limited geographical operational area. This is particularly challenging in commercial sectors where companies are looking for vessels to deploy for short projects at geographically dispersed locations. Mobilisation and demobilisation of larger vessels can cost over $1 million depending on the transportation distance/time and mode of transport.

Such transport issues are exacerbated by vessels requiring moonpools for launch and recovery systems (LARS) as they typically require even larger, more costly vessels to incorporate sufficient additional deck space to maintain traditional functions and structural integrity. Where a large moon pool is used for the deployment of payloads the moonpool is typically small relative to the deck through which it operates. As such despite SWATH vessels being a more stable platform with a low acceleration force compared to traditional monohull vessels of similar size they are not often used for commercial operations. SWATH vessels are also more costly to build and maintain than a monohull due to increased size in particularly beam and complexity of the design.

Although SWATH vessels are considered very stable platforms, they are extremely sensitive to weight distribution and require the planned positioning of the equipment. This is exacerbated when adding large deployable payloads and LARS due to the significant changes in weight and thus displacement. In instance where the payload is large relative to the vessel deploying it (not traditionally the case due to typically large size of SWATH vessel used - increased CAPEX and OPEX costs) the change in weight will need to be compensated for which adds significant complexity

A hydrogen powered SWATH vessel presents a number of additional challenges. Hydrogen fuel tanks are large compared to a conventional fossil fuel tank and need to be accommodated within the structure. Spillage or escape of hydrogen fuel causes a fire risk. Hydrogen gas presents some particular issues it is stored at high pressure; therefore hydrogen fuel tanks must be made very strong and any damage sustained can compromise integrity. The small molecular size of hydrogen results in a susceptibility for hydrogen gas to leak through the walls of containment structures and collect in other sealed spaces in the presence of oxygen presenting a risk of fire and explosion. This is particularly significant in a vessel which by its nature is sealed to ensure that it floats. The explosive and flammable nature of hydrogen gas in combination with the difficulty in containment presents challenges not encountered in a SWATH vessel powered by conventional means.

Accordingly the current invention provides a modular vessel that can be easily transported in component form and reversibly assembled in a location close to the area of operation. Thus allowing for rapid deployment over land.

The invention relates particularly to hydrogen fuel powered craft. Hydrogen fuel is a hydrogen based fuel that can be used directly in or provide hydrogen gas for use in a fuel cell. Hydrogen based fuel can include methanol, methyl cyclohexane, Liquid organic hydrogen carriers (LOHC), ammonia and Hydrogen gas stored as a liquid or a gas.

The modular vessel is also arranged to minimise danger of ignition of hydrogen gas by separation of hydrogen and the hydrogen components such as hydrogen fuel tanks, hoses and fuel cell from sources of ignition such as batteries and electrical systems and positioning of said components such that the prevailing wind does not bring hydrogen into contact with a potential source of ignition.

### Summary of Invention

Aspects and/or embodiments seek to provide a modular SWATH vessel that can be mobilised at a lower cost, can be adapted to multiple use cases without incurring significant costs and provide a vessel that by design is able to deploy larger systems payload in a smaller vessel and ensures lower capital expenditure.

According to a first aspect, there is provided a hydrogen powered, modular, small waterplane area twin hull (SWATH) vessel having a front end and a rear end and a central vertical longitudinal plane A. The vessel comprising a plurality of modular vessel components including: a longitudinally extending first lower hull and a longitudinally extending second lower hull for containing one or more hydrogen storage tanks; a plurality of struts each reversibly connected to one of said first hull and said second hull; a fore cross-structure reversibly connected to a strut connected to the first lower hull and the fore cross-structure reversibly connected to a strut connected to the second lower hull; an aft cross-structure reversibly connected to a strut connected to the first lower hull and the aft cross-structure reversibly connected to a strut connected to the second lower hull; and a deck structure reversibly connected between the fore cross-structure and the aft cross-structure.

Modular design allows the vessel to be broken down for shipping by road in a more compact package, significantly reducing the volume required and overall dimensions of the vessel when being transported. This makes transportation by road possible, improves the geographical area that can be served by the vessel, increases the speed of deployment for said diverse geographical area and reduces mobilisation costs.

Optionally, each of the lower hulls comprise an outer skin having an inner surface and an outer surface, a plurality of circumferentially extending reinforcing elements connected to the inner surface of each lower hull and including a hydrogen fuel tank locating means for locating one or more of the hydrogen fuel tanks. Said reinforcing elements may define a protective void between the outer skin and a hydrogen storage tank when in use.

The protective void allowing the outer skin space to flex or permanently deform in the case of an impact between one of the lower hulls and another object without the hydrogen fuel tank sustaining damage that might compromising the structural integrity of the hydrogen fuel tank.

Optionally, the hydrogen fuel tank locating means including a friction reducing means for easing insertion and removal of hydrogen fuel tanks. The friction reducing means may comprise a friction reducing material such as a polymer, PTFE or nylon skid or a friction reducing mechanism such as a roller, bearings or a sliding tray. An easily removable hydrogen fuel tank allows for inspection and refilling or rapid fuel tank swap in the case that there is no bunker facilities available for refuelling at the port.

Optionally, the first lower hull and/or the second lower hull further including: an aft cone containing an electrical drive motor and means of propulsion.

Optionally, the first lower hull and/or the second lower hull further including: a forward nose cone defining a further impact protection void therein.

The forward nose cone and associated void providing further protection to the hydrogen fuel tank in case of a frontal impact. Both front and rear cones provide a region separated from the hydrogen fuel tank compartment for electrical equipment including sensors. The rear cone housing the propulsion system components including the motor and propulsion means which may present a fire risk if hydrogen were to come in contact with these potential sources of ignition.

Optionally, the first lower hull and or second lower hull include one or more water and hydrogen gas tight bulkheads defining with the outer skin a hydrogen fuel tank compartment separate from said forward nose cone and/or aft cone.

Optionally, the forward nose cone includes sensors located therein. Locating sensors in the front nose cone allows easy sampling of sea water and distance sensing or scanning.

The fluid tight bulkhead acts as a cofferdam to prevent seawater ingress and contains any escaped hydrogen for controlled venting in a safe location away from sources of ignition. The nose cones can be designed and optimised for different sensor payloads. By having removable nose cones these sensor configurations can be rapidly swapped with very little cost implication or other vessel modifications required allowing the vessel to change role rapidly.

The removable nose cone provides swift change of sensor equipment should the role of the vessel change.

Optionally, said hydrogen fuel tank compartment includes a vent hose with a first end connected to said hydrogen storage compartment and a second end located above the surface of the water when the vessel is in use.

Underwater sealed compartments present a serious risk of fire or explosion if hydrogen collects in the presence of oxygen. Venting that compartment in a controlled manner mitigates this risk.

Optionally, the layout of the modular vessel components and/or drive components, is symmetrical about the central longitudinal plane A.

The general arrangement of the vessel being symmetrical about the plane A increases stability and helps optimise the vessel trim. The fore and aft cross-structures are preferably the same construction and/or layout and the equipment weight distributed across these sections to optimise the location of the centre of gravity of the cross-structures at or on plane A . Additional ballast may be deployed fore and aft to adjust trim as necessary if the equipment weight is unable to be balanced.

Optionally, the vessel components are able to fit within 2 standard ISO containers when disconnected.

Optionally, the first lower hull and or second lower hull comprise one or more extension portions comprising lateral thrustors, said extension portions reversibly connected between the hydrogen fuel tank compartment and either of the fore nose cone or the aft propulsion cone.

Reversibly connected extension portions enable swift addition and removal of extension portions for adaptation of the vessel to different roles. For example the addition of lateral thrustors where a geostationary position may need to be maintained or where manoeuvring in a small port facility or docking station is required.

Optionally, the aft cross-structure includes a plurality of compartments each separated by a bulk head, including at least a fuel cell compartment, a battery compartment and optionally an electrical systems compartment wherein the fuel cell compartment is separated from the other of the plurality of compartments by a fluid tight bulkhead and preferably a hydrogen gas tight bulkhead.

Optionally, the aft cross-structure further includes a first end and a second end two outboard compartments located one at each of the first end and second end and a central compartment located between the two outer compartments; wherein the outboard compartments are each a fuel cell compartment; and the central compartment is an electrical systems compartment.

Optionally, the aft cross-structure further includes a first end and a second end, two outboard compartments located one at each of the first end and second end, a central compartment located at the mid-point M of the aft cross-structure and two median compartments located between the central compartment and each of the outer compartments. Preferably, the outer compartments are each a fuel cell compartment, the median compartments are each a battery compartment; and the central compartment is an electrical systems compartment.

Optionally, the aft cross-structure includes a gas tight bulkhead between the fuel cell compartment and the battery compartment and optionally the electrical systems compartment.

The bulk heads create additional structural reinforcement for the cross-structures as well as preventing the spread of fire between compartments. Given the low flash point of hydrogen and the likelihood of a source of ignition from electrical systems including the high risk of fire associated with lithium-ion batteries it is beneficial that the gas tight bulkhead separates the fuel cell compartment from the battery compartment to reduce the chance of ignition and indeed the compartment which is likely to contain a lithium-ion battery from the electrical systems / remote bridge compartment.

Optionally, the fore cross-structure and/or aft cross-structure is symmetrical about the central plane A to the extent the centre of gravity G of each rests on or near the central plane A.

Optionally, the struts are reversibly connected to one of the aft cross-structure or the fore cross-structure at or outboard of the bulkhead between the outboard compartment and the central or median compartments.

The fuel cell compartments being located to the outer side of the aft compartment and the struts joining the aft cross-structure at or outboard of the gas tight bulk head reduces the length of the hydrogen fuel hoses required between the hydrogen fuel tanks located in the submerged hulls and the fuel cell. The need for a connection through the gas-tight bulk head is removed which reduces the danger of a leak through to the battery or electrical compartments. There is only a compartment on one side of the fuel cell compartment thus only one bulkhead is required to isolate the hydrogen components from the possible sources of ignition of the electrical components including the battery in the other compartments.

Optionally, the fuel cell compartment of the aft cross-structure includes venting pipes having a first end connected to the fuel cell compartment and a second end facing rear, located to the rear of the aft cross-structure and/or positioned to vent any escaped hydrogen gas to the rear of the vessel.

Optionally, the fore cross-structure includes a plurality of compartments including median compartments or outer compartments that are a battery compartment and a central compartment that is an electrical systems compartment.

The batteries located in the median compartments between the fuel cell, if present, and the electrical system in the aft cross-structure and if 4 batteries are used in the case of an increase in peak power or endurance are required in the same location at the forward cross-structure means that the batteries which are the heaviest item are located as close to the struts as possible for structural and stability reasons, whilst mitigating fire risk by not requiring hydrogen fuel hoses to be routed through the battery compartment.

Optionally, only the aft cross-structure contains a fuel cell.

The fuel cell compartments located at the outboard ends of the aft cross-structure side ensures that hydrogen is not vented across the deck structure which may contain sources of ignition when the vessel is moving. Even when the vessel is in station keeping mode, the vessel will hold position with its bow into the waves which means that the prevailing wind will be blowing head onto the vessel and therefore the position of the fuel cells and venting pipes vented to the aft moves any vented hydrogen away from the vessel not through the vessel.

Optionally, the fore cross-structure and/or aft cross-structure are connectable to a mast at or near the electrical systems compartment which are preverbally located in the central compartments.

The electrical compartment are located in the middle of both the fore and aft cross-structures, this is to align with the mast locations and to optimise the routing of the cables.

Optionally, the fore cross-structure and aft cross-structure include, a base, a plurality of external walls and structural bulkheads between the compartments; and wherein said compartments contain racks for receiving the fuel cells, batteries and/or electrical equipment; said racks structurally connected to at least the base and a bulkhead and or external wall by a plurality of resilient mountings; and said fuel cells, batteries and/or electrical equipment releasably mounted in said racks.

Modular rack systems enable the rapid drop in and exchange of, electrical racks and systems, battery systems, fuel cell systems in the case of technical problems or damage. It also enables the vessel size to be decreased as the compartments do not need to accommodate people inside as the equipment can be removed from the vessel for testing and repairs. Securing of the racks to the bulk head, walls and/or base, surprisingly further improves structural rigidity in spite of the resilient mountings.

Optionally, the deck structure includes two or more longitudinal reinforcement members extending between the fore cross-structure and aft structure; and optionally two or more lateral reinforcement members extending between said longitudinal reinforcement members.

Longitudinal reinforcing members provide increased tortional rigidity whilst allowing a flexible configuration of the deck area. Longitudinal reinforcing members also help transfer cables between fore and aft cross-structures to allow for data and power transfer whilst also improving structural integrity of the vessel.

Optionally, the deck structure defines an aperture through which machinery may operate or across which a reinforcing structure may be attached.

Using two cross-structures and longitudinal reinforcement members instead of one large cross-structure allows for the inclusion of large aperture or moon pool for LARS deployment relative to the vessel size or deck area. The aperture created between the cross-structures and or lateral reinforcement members and longitudinal reinforcement members is independent of the cross-structures and can be exchanged to rapidly install and remove various launch and recovery systems (LARS) to adapt the vessel to a new role. By enabling easy and rapid change of LARS system the vessel can be used for multiple different roles without requiring major modifications

Optionally, the machinery or reinforcing structure is structurally attached to the longitudinal reinforcement members and optionally the lateral support members and/or the fore and aft cross-structures for providing increased tortional rigidity to the vessel.

Optionally, the deck structure further includes a decking fixed to the reinforcement members and optionally the cross-structures for increasing rigidity.

Optionally, the plurality of struts comprise a first strut reversibly connected to the first lower hull toward the front end, a second strut reversibly connected to the second lower hull toward the front end, a third strut reversibly connected to the lower hull toward the rear end and a fourth strut reversibly connected to the second lower hull toward the rear end of the vessel.

In a further aspect of the current invention the vessel is an autonomous vessel.

The features of the vessel are particularly suited to an autonomous vessel as this allows decreased size no super structure and thus lighter weight for greater stability and provides improved endurance.

### Brief Description of Drawings

Embodiments will now be described, by way of example only and with reference to the accompanying drawings having like-reference numerals, in which:
Figure 1 shows a modular SWATH vessel according to the current invention;
Figure 2 shows an exploded view of the modular components of a SWATH vessel according to the current invention;
Figure 3 shows one of the plurality of lower hulls according to the current invention;
Figure 4 shows a section view of one of the plurality of lower hulls according to the current invention;
Figure 5 shows a schematic view of the layout of an aft cross-structure according to the current invention; and
Figure 6 shows a schematic view of the layout of a fore cross-structure according to the current invention; and
Figure 7 shows configurations of reinforcing deck elements according to the current invention.

### Specific Description

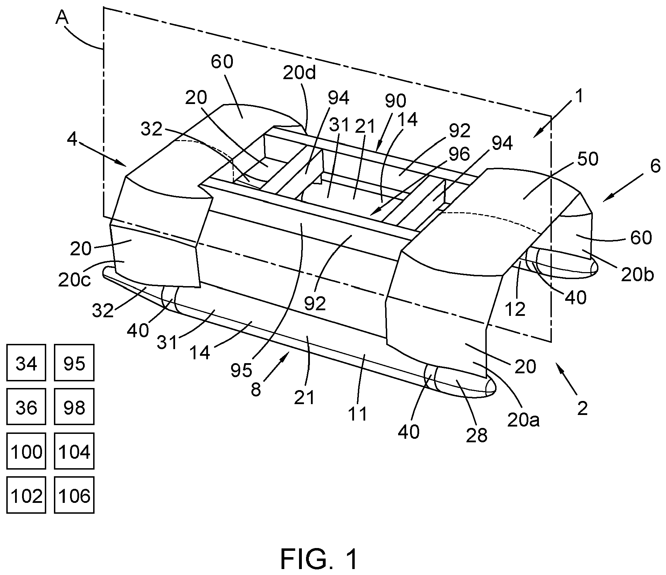

Referring to Figure 1, a first embodiment will now be described. Figure 1 shows an isometric view of the modular SWATH vessel 1 in an assembled state. The vessel 1 has a front end 2 or fore end 2, a rear end 4 or aft end 4, a left side 6 and a right side 8 and a central vertical longitudinal plane A running down the centre of the vessel 1 from the front end 2 to the rear end 4.

The SWATH vessel 1 comprises a plurality of modular vessel components 3 reversibly connected to one another including at least a first lower hull 11 and a second lower hull 12, a plurality of struts 20, a fore cross-structure 50, an aft cross-structure 60 and a deck structure 90.The layout of the vessel components 3 is preferably symmetrical about the central longitudinal plane A. Preferably, there are as few different modular components as possible. Therefore, each of the struts 20, lower hulls 11, 12 and/or cross-structures 50, 60 may be interchangeable with any other of the struts 20, lower hulls 11, 12, cross-structures 50, 60 on the vessel respectively.

The lower hulls 11,12 also known as demi-hulls 11, 12 extend longitudinally and are located toward the left side 6 and the right side 8 of the vessel 1, a plurality of struts 20 extend upwards from the lower hulls 11, 12 and connect each of the lower hulls 11, 12 to one or more cross-structures 50, 60. The cross-structures extend from the left side 6 to the right side 8 of the vessel 1 and each is connected via the struts 20 to both the first lower hull 11 and the second lower hull 12. The lower hulls 11, 12 are submergible buoyancy structures that provide the majority of the buoyancy for the vessel 1 and are completely submerged when the vessel 1 is in use. The struts 20 are support structures that extend upwards from the submerged lower hulls 11, 12 to support the cross-structures 50, 60 above and clear from the surface of the water when the vessel 1 is in use. The plurality of struts 20 comprise two struts 20 extending from each of the lower hulls 11,12 in figure 1 however it will be understood that one or more struts 20 can be used per lower hull 11,12.

The plurality of struts 20 each extend from one of the lower hulls 11, 12 to one or more of the cross-structures 50, 60 for supporting said cross-structures 50, 60 above the water when the vessel 1 is in use. The struts 20 extend upwards from each of the lower hulls 11, 12 to the one or more cross-structures preferably at an angle of less than 45 degrees to the vertical and more preferably still at or near vertical. Each of the struts 20 are reversibly connected to the respective lower hull 11, 12 and reversibly connected to the respective cross-structure 50, 60 toward the left side 6 or right side 8.

There are at least two struts 20, one reversibly connected to each of the lower hulls 11, 12, however, preferably there are four struts 20. Two struts 20 connected to each of the lower hulls 11, 12. Figure 1 shows a first strut 20a reversibly connected towards the front of the first lower hull 11 and the first strut 20a reversibly connected to a fore cross-structure 50. A second strut 20b is reversibly connected to the second lower hull 12 toward the front end 2 of said lower hull 12 and the second strut 20b is reversibly connected to the fore cross-structure 50. A third strut 20c is reversibly connected to the lower hull 11 toward the rear end 4 of the first lower hull 11 and the third strut 20c is reversibly connected to a rear cross-structure 60. A fourth strut 20d is reversibly connected to the second lower hull 12 toward the rear end 4 of the vessel 1 and connected to the rear cross-structure 60.

The vessel shown in figure 1 includes a fore cross-structure 50 and a rear cross-structure 60. The two cross-structures 50, 60 are each reversibly connected to a deck structure 90. The dec structure 90 comprises a plurality of longitudinal reinforcement members 92. Optionally the deck structure 90 may also include lateral reinforcement members 94 extending between the plurality of longitudinal reinforcing members 92 as shown in figure 1. The reinforcing members 92, 94 provide additional rigidity to the vessel 1 in particular tortional rigidity. The Longitudinal reinforcing members 92 may be reversibly connected to both the fore cross-structure 50 and the aft cross-structure 60. The one or more lateral reinforcing members 92 if included are reversibly connected between the plurality of longitudinal reinforcing members 94.

The longitudinal reinforcement members 92 and the cross-structures 50, 60 and or lateral reinforcement members 94 may define an aperture 96 extending through the deck structure 90 for providing access to the water from the top of the deck structure 90 and through which machinery 106 may work. This aperture 96 can be referred to as a moon pool, the deck structure 90 allows for a much greater aperture area relative to the size of the deck than in a SWATH vessel with traditional construction. The machinery 106 may be reversibly connected to the reinforcing members 92, 94 of the deck structure 90 and may be a reinforcing member 98 for further improving the structural integrity and rigidity of the vessel 1. If machinery 106 is not required for the role of the SWATH vessel 1 a reinforcing structure 98 may be reversibly connected across the aperture 96 for improving the structural integrity and rigidity of the vessel 1. In particularly the torsional rigidity of the vessel 1.

It will be understood that two or more struts 20 may be used to support one or more cross-structures 50, 60 above two or more lower hulls 11, 12.

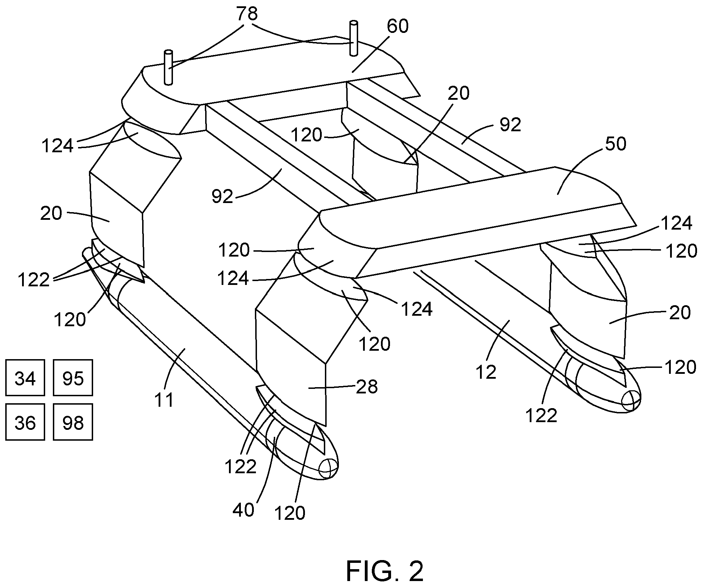

Figure 2 shows the same vessel 1 as figure 1 without the lateral reinforcing members 94 and in a disassembled state, by way of an exploded drawing. When disassembled the vessel components 3 fit within 2 standard ISO containers. One example of the dimensions of an ISO container is 12.2 x 4.8 x 2.9m. In particular the fore and aft cross-structures 50, 60 are preferably up to the same width (4.8m) as a container to ensure they fit. The overall vessel dimensions and deck space is greater than the size of the components. i.e. a vessel circa 13m x 8m x 3.5m is assembled from modules that are contained within preferably 2 of said ISO containers. The example of which has the greatest dimension of 12.2m.

Reversibly connected herein refers to a connection that is non-permeant, made using a non-permeant fixing such as a threaded fastener or a latch(s) that locate and fix complementary faces and can be released with or without tools and without breaking or cutting a permanent bond or weld. Each reversible connection may include a complementary fixing means 120 on each of the vessel components 3 to allow each of the vessel components 3 to be reversibly connected to one another. Each strut 20 and the lower hulls 11, 12 include a first complementary fixing 122 for connecting each strut 20 to one of the lower hulls 11, 12. Each strut 20, the fore cross-structure 50 and the aft cross-structure 60 include a second complementary fixing means 124 for joining each strut 20 and one or more of the fore cross-structure 50 and the aft cross-structure 60. The deck structure 90 and the fore and aft cross-structures include third complementary fixing means 126 for connecting the deck structure 90 and the cross-structures 50, 60.

Hydrogen fuel hoses 110 fluidly connect the one or more hydrogen fuel tanks 100 to the fuel cell 102, cooling liquid hoses 110 fluidly connect the motor 34, battery 102 and electrical systems 104 if cooling is required, and electrical wiring cables 110 run through and are pre-fitted within the struts 20. Where the struts 20 are releasably connected to either of a cross-structure 50, 60 or a lower hull 11, 12 the cables and hoses go through water tight glands. The hoses and cables 110 have sufficient slack to allow access for connection and preferably a quick coupling to connect the hoses and cables within the struts to the corresponding connectors in the cross-structures 50, 60 and lower hulls 11, 12. The struts 20 may further include an access panel to allow access for the connection and disconnection of the hoses and cables 110. The skilled person will understand that a fuel cell 102 may be a hydrogen fuel cell, a methanol fuel cell or a fuel cell capable of producing electricity from a hydrogen fuel.

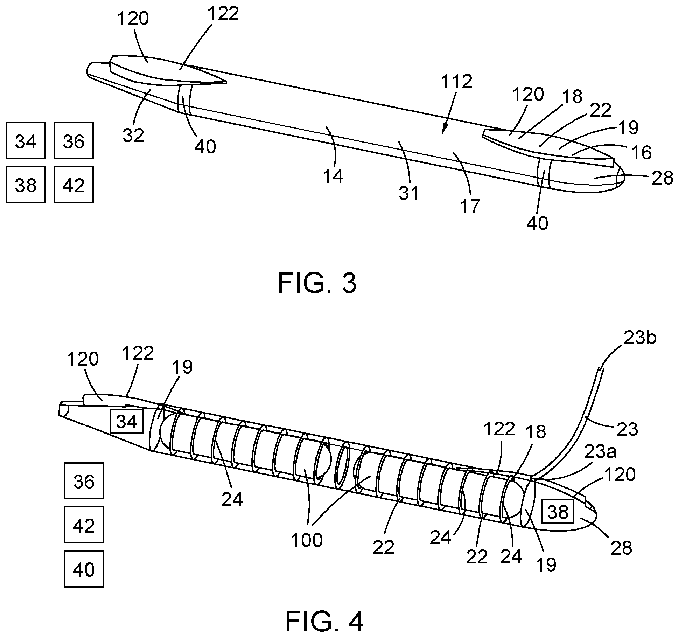

Figures 3 and 4 show a lower hull 11, 12. The lower hulls 11, 12 are submergible and for containing one or more hydrogen fuel tanks 100. Preferably the first lower hull 11 and the second lower hull 12 are symmetrical or further preferably they are the same and therefore, interchangeable. This allows for symmetrical buoyancy and weight distribution across the vessel 1 as well as ease of manufacture. Normally, the lower hulls 11, 12 will be a variable cross section prism. A circular cross section is often used but other shapes can be more cost effective or provide improved hydrodynamic properties.

Figure 3 shows the lower hull complete 11, 12 and figure 4 shows a section view taken longitudinally. The lower hulls 11, 12 each include an outer skin 14 providing structure and a water tight barrier to maintain buoyancy of the lower hull 11, 12. the section in figure 4 is through the outer skin 14 to expose the features contained therein. The outer skin 14 has an inner surface 16 and an outer surface 17. The lower hull 11, 12 may further include a plurality of circumferentially extending reinforcing elements 18 connected to the inner face 16 of the outer skin 14. The reinforcing elements 18 may be fixed to the lower hull 11,12 around its full section or at one or more parts of the section. The reinforcing elements may include deformable impact absorbing structures 18a. It will be understood that circumferentially extending includes the reinforcing element 18 conforming to a lower hull 11, 12 that is not circular in cross section. A plurality of reinforcing elements 18 are located along the length of the lower hull 11, 12 to provide support for the outer skin 14. The reinforcing elements 18 are preferably connected to the outer skin 14 and may protrude from the outer skin 14. The reinforcing elements 18 include a hydrogen fuel tank locating means 22 for locating and/or restraining one or more hydrogen fuel tanks 100 within the lower hull 11,12. The locating means 22 may include a continuous face 22a or a number of locating faces 22a. The locating means 22 may also include a friction reducing means 24 for easing installation and removal of a hydrogen fuel tank 100. The friction reducing means 24 may include a low friction material 24a or a friction reducing mechanism 24b.

The reinforcing elements 18 define a protective void 26 between the outer skin 14 and the hydrogen fuel tank 100 when installed. This allows for flexing and/or minor damage of the outer skin 14 in the case of a collision without damage to the rigid hydrogen fuel tanks 100. The protective void also provides consistent buoyancy to the lower hulls 11, 12 which is their primary function. The mass of a hydrogen cylinder changes with the quantity of Hydrogen therein. The protective void 26 may be filled with an energy absorbing material 26a for example an energy absorbing foam.

Each lower hull 11, 12 includes a forward nose cone 28, a midsection 31, comprising a hydrogen fuel tank compartment 21 and an aft cone 32. The nose cone 28 and an aft cone 32 are preferably releasably connected to the midsection 31 to allow easy access, removal and installation of the hydrogen fuel tank from the lower hull and the electrical drive motors located in the aft cones. This allows inspection of the hydrogen fuel tank and in instances where there are no bunkering facilities in the port of mobilisation / operations the hydrogen fuel tanks can be easily removed from the vessel to be transported for filling with liquid hydrogen at another facility

The nose cone defines a protective void 30 and may also contain sensors 38 for measuring the surroundings for example sensors for detecting water temperature, current, depth or other environmental factor for scientific research or a distance sensor for navigation/manoeuvring of the vessel. The protective void 30 may also contain an impact absorbing material. The aft cone 32 includes an electric drive motor 34 contained therein and a means of propulsion 36.

One or more of the lower hulls 11, 12 may further include one or more water and gas tight bulk heads 19 connected and/or sealed to the outer skin 24 and defining together the hydrogen fuel tank compartment 21. Preferably the fuel tank compartment 21 is sealed apart from the vent. The bulkheads 19 separate the hydrogen fuel tank compartment 21 from the protective void of the nose cone 28 and the propulsion means 36 and electric drive motor 34 of the aft cone 32. Thereby preventing hydrogen gas leaking from the hydrogen fuel tank compartment 21 into the front and aft cones 28, 32 where there may be risk of ignition and/or explosion and where any sensors 38 and/or electrical drive motor 34 may provide a source of ignition. The hydrogen fuel tank compartment 21 further includes a vent hose 23 having a first end 23a connected to said hydrogen fuel tank compartment 21 and a second end 23b located above the water line in use. The vent hose 23 may be routed inside one of the plurality of struts 20 in order to locate the strut above the waterline. Preferably, the second end 23b of the vent hose 23 is located to vent hydrogen gas to the rear of the vessel 1, most preferably located on the trailing edge of a strut 10 toward the rear 4 of the vessel 1.

The lower hulls may further include extension portions 40 reversibly connected between the mid-section 31 or Hydrogen fuel tank compartment 21 and one of the forward nose cone 28 or aft cone 32. The extension portions 40 may include lateral thrustors 42 for manoeuvring the vessel 1.

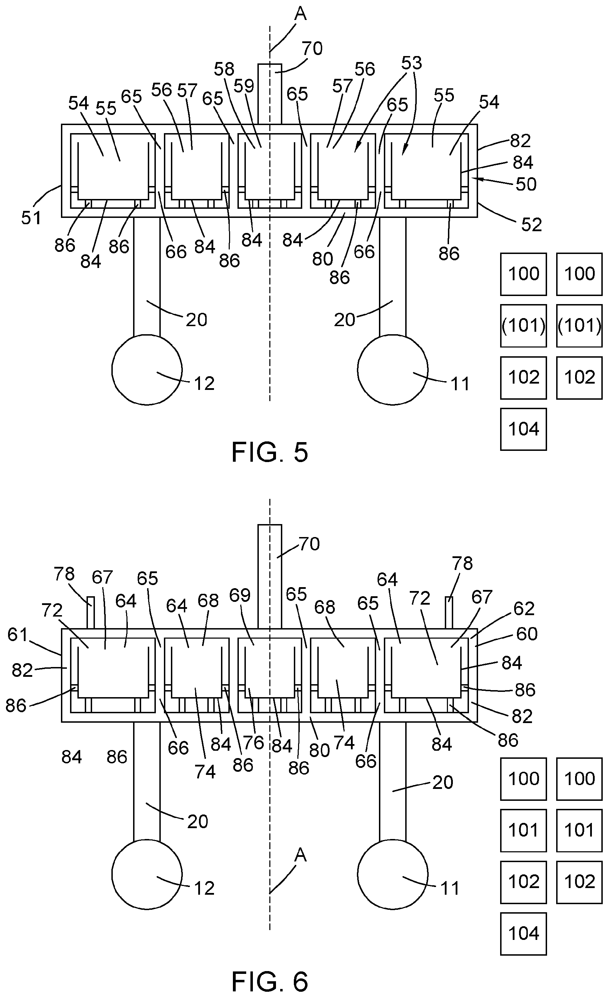

Figures 5 and 6 show a possible configuration of a fore cross-structure 50 and aft cross-structure 60 respectively. Each cross-structure 50, 60 extends from the left side 6 to the right side 8 of the vessel 1, includes a plurality of compartments 53, 64 separated by bulkheads 65 and is preferably symmetrical about the central plane A or such that the centre of gravity of the cross-structure 50, 60 rests at or close to the central plane A. Each cross-structure 50, 60 includes a structural base 80 and external walls 82 to which the structural bulkheads 65 are connected to form a ridged structure. The cross-structures 50, 60 may also include upper structural panels 88 connected to the external walls 82 and bulkheads 65.

The aft cross-structure 60 includes at least a fuel cell compartment 67, a battery compartment 68 and optionally an electrical systems compartment 69 for containing one or more fuel cells 101, one or more batteries 102, or electrical systems 104 respectively. Each compartment 64 is separated from the other by a bulkhead 68. The fuel cell compartment 67 is separated from the other of the plurality of compartments 64 by a hydrogen gas and fluid tight bulkhead 66.

The aft cross-structure 60 includes a first end 61 and a second end 62 and outboard compartments 72 each located at one of said first end 61 and said second end 62, a central compartment 76 located at the mid-point of the cross-structure 60. A median compartment 74 may be located inboard of the outboard compartments 72 and between the central compartment 76 and outboard compartments 72. Preferably the outboard compartments 72 are fuel cell compartments 67, the median compartments 74 are battery compartments 68 and the central compartment 76 is an electrical systems compartment 69.

Preferably the struts 20 are connected to the aft cross-structure 60 at or outboard of the gas tight bulkhead 66 thereby minimising the distance travelled by the hydrogen gas from the hydrogen fuel tank 100 to the fuel cell 101 which is beneficial given the difficulty in containing hydrogen gas. Locating the fuel cell compartments 67 in the outboard compartment 72 means only one hydrogen gas tight bulkhead 66 is required for each fuel cell compartment 67 and reduces the chance of fire or explosion and improves the separation of the hydrogen gas from sources of ignition that may be present in the battery and electrical compartments. Hydrogen fuel hoses fluidly connect the hydrogen fuel tanks 100 in the struts 20 to the fuel cell compartment 67, electrical lines electrically connect the battery compartment 68 to the electric drive motor 34. Connection of the Struts 20 at or outboard of the hydrogen gas tight bulkhead 66 maintains separation between the hydrogen gas and sources of ignition without further gas tight bulkheads 66. The hydrogen fuel hoses, cooling liquid hoses 110, and electrical lines 110 are pre-fitted within the struts 20. Both ends the hoses and or lines 110 pass though water tight glands at or near the connection points.

The fore cross-structure 50 also includes a first end 51 and a second end 52 and is reversibly connected to a strut 20 toward each of these ends 51, 52. The fore cross-structure 50 may include one or more of a battery compartment 57, and electrical systems compartment 59. The fore cross-structure 50 may also include a fuel cell compartment 55 if the energy draw requires it, however, preferably only the aft cross-structure 60 includes a fuel cell 100 so that any hydrogen gas that escapes is easily vented down wind or to the rear of the vessel 1 and does not pass through or across other parts of the vessel 1 that may contain sources of ignition thereby reducing the chance of explosion or fire.

The fuel cell compartments 67, 55 include a venting pipe 78 having a first end 78a connected to said fuel cell compartment and a second end 78b facing to the rear end 4 of the vessel and/or positioned to vent any escaped hydrogen gas to the rear of the vessel 1. Preferably, the second end 78b of the venting pipe 78 is located to the rear of the aft cross-structure 60.

The fore cross-structure 50 and/or the rear cross-structure 60 may be reversibly connectable to a mast 70 at or near the electrical systems compartment 59, 69 which is preferably the central compartment 58, 76. The aft cross-structure of figure 6 includes a mast 70.

The compartments 53, 64 of the fore cross-structure 50 and the aft cross-structure 60 include racks 84 for receiving and restraining fuel cells 101 batteries 102 and electrical systems 104. The racks 84 are connected to the base 80 and one or more of the bulkheads 54, 65 or the base 80 and one or more of the walls 82 or the base 80, one or more of the bulkheads 54, 65 and one or more of the walls 82 by a plurality of resilient mountings 86. The resilient mountings 86 may be antivibration and/or impact mounts.

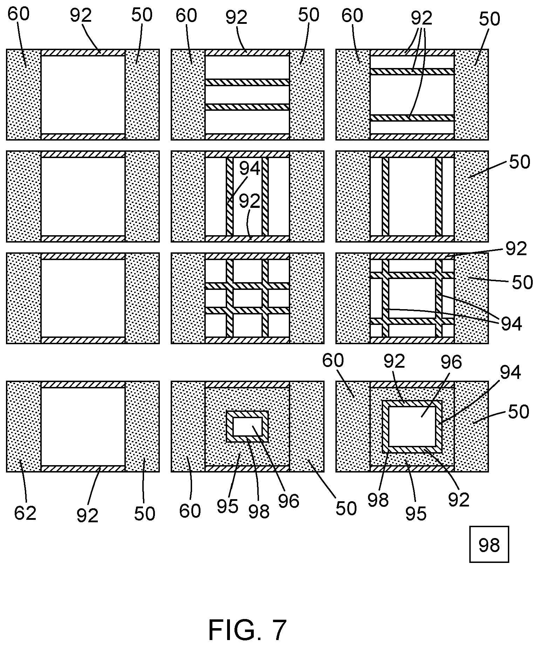

Figure 7 shows possible configurations of longitudinal reinforcement members 92 and lateral reinforcement members 94 in the deck structure 90. There can be a plurality of longitudinal reinforcement members 92 and optionally a plurality of lateral reinforcement members 94. There also may be additional decking 95 which may be fixed to the reinforcement members as a shear panel to increase rigidity.

The layout of the drive components 34, 36, 100, 200 is preferably symmetrical about the central longitudinal plane A.

The modular vessel 1 of the current invention can be an autonomous vessel 1 with no deckhouse or super structure on the vessel. Thereby decreasing the volume to be transported as well as lowering the vessels centre of gravity and further improving the inherent stability of a SWATH vessel 1.

Any system feature as described herein may also be provided as a method feature, and vice versa. As used herein, means plus function features may be expressed alternatively in terms of their corresponding structure.

Any feature in one aspect may be applied to other aspects, in any appropriate combination. In particular, method aspects may be applied to system aspects, and vice versa. Furthermore, any, some and/or all features in one aspect can be applied to any, some and/or all features in any other aspect, in any appropriate combination.

It should also be appreciated that particular combinations of the various features described and defined in any aspects can be implemented and/or supplied and/or used independently.

## Claims

1. A hydrogen fuel powered, modular, small waterplane area twin hull (SWATH) vessel (1) having a front end (2) and a rear end (4) and a central vertical longitudinal plane A; the vessel (1) comprising a plurality of modular vessel components (3) including:
a longitudinally extending, buoyant, submergible, first lower hull (11) and a longitudinally extending, buoyant, submergible, second lower hull (12) for containing one or more fuel tanks (100);
a plurality of struts (20) each reversibly connected to one of said first hull (11) and said second hull (12);
a fore cross structure (50) reversibly connected to a strut (20) connected to the first lower hull (11) and the fore cross structure (50) reversibly connected to a strut (20) connected to the second lower hull (12);
an aft cross structure (60) reversibly connected to a strut (20) connected to the first lower hull (11) and the aft cross structure (60) reversibly connected to a strut (20) connected to the second lower hull (12); and
a deck structure (90) reversibly connected between the fore cross structure (50) and the aft cross structure (60).

2. The SWATH vessel (1) of claim 1, wherein each of the lower hulls (11, 12) comprise an outer skin (14) having an inner surface (16) and an outer surface (17), a plurality of circumferentially extending reinforcing elements (18) connected to the inner surface (16) of each lower hull (11, 12) and including a fuel tank locating means (22) for locating one or more of the fuel tanks (100); and
said reinforcing elements (18) defining a protective void (26) between the outer skin (14) and a fuel tank (100) when in use; and/or
the fuel tank locating means (22) including a friction reducing means (24) for easing insertion and removal of fuel tanks (100), optionally the friction reducing means (24) comprising a friction reducing material (24a) or a friction reducing mechanism (24b).

3. The SWATH vessel (1) of any preceding claim and the first lower hull (11) and/or the second lower hull (12) further including:
an aft cone (32) containing an electrical drive motor (34) and means of propulsion (36); and/or
a forward nose cone (28) defining a further impact protection void (30) therein; and optionally
wherein the first lower hull (11) and or second lower hull (12) include one or more water and gas tight bulkheads (19) defining with the outer skin (14) a fuel tank compartment (21) separate from said forward nose cone (28) and/or aft cone (32).

4. The SWATH vessel of claim 3, wherein said fuel tank compartment (21) includes a vent hose (23) with a first end (23a) connected to said fuel tank compartment (21) and a second end (23b) located above the surface of the water when the vessel (1) is in use.

5. The SWATH vessel (1) of any preceding claim, wherein the layout of the modular vessel components (3, 11, 12, 20, 50, 60, 70) and/or drive components (34, 36, 200), is symmetrical about the central longitudinal plane A; and/or
wherein the vessel components (3, 11, 12, 20, 50, 60, 70) are able to fit within 2 standard ISO containers when disconnected.

6. The SWATH vessel (1) of any one of claims 3 to 5, wherein the first lower hull (11) and or second lower hull (12) comprise one or more extension portions (40) comprising lateral thrustors (42), said extension portions (40) reversibly connected between the fuel tank compartment (21) and either of the fore nose cone (28) or the aft propulsion cone (32).

7. The SWATH vessel (1) of any preceding claim, wherein the aft cross structure (60) includes a plurality of compartments (64) each separated by a bulk head (65), including at least a fuel cell compartment (67), a battery compartment (68) and optionally an electrical systems compartment (69);
wherein the fuel cell compartment (67) is separated from the other of the plurality of compartments (64) by a hydrogen gas tight bulkhead (66); and optionally wherein:
the aft cross structure (60) further includes a first end (61) and a second end (62), two outboard compartments (72) located one at each of the first end (61) and second end (62) and a central compartment (76) located between the two outer compartments (72); wherein the outboard compartments (72) are each a fuel cell compartment (67); and the central compartment (76) is an electrical systems compartment (69); or
the aft cross structure (60) further includes a first end (61) and a second end (62), two outboard compartments (72) located one at each of the first end (61) and second end (62), a central compartment (76) located at the mid-point M of the aft cross structure (60) and two median compartments (74) located between the central compartment (76) and each of the outer compartments (72);
wherein the outer compartments (72) are each a fuel cell compartment (67);
the median compartments (74) are each a battery compartment (68); and the central compartment (68) is an electrical systems compartment (69).

8. The SWATH vessel (1) of claims 7, wherein the aft cross structure (60) includes a gas tight bulkhead (66) between the fuel cell compartment (67) and the battery compartment (68) and optionally the electrical systems compartment (69).

9. The SWATH vessel (1) of any preceding claim, wherein the fore cross structure (50) and/or aft cross structure (60) is symmetrical about the central plane A to the extent the centre of gravity G of each rests on or near the central plane A.

10. The SWATH vessel (1) of any one of claims 7 to 9, wherein the struts (20) are reversibly connected to one of the aft cross structure (60) or the fore cross structure (50) at or outboard of the bulkhead (65) between the outboard compartment (72) and the central (76) or median compartments (74).

11. The SWATH vessel (1) of any one of claims 7 to 10, wherein the fuel cell compartment (67) of the aft cross structure (60) includes venting pipes (78) having a first end (78a) connected to the fuel cell compartment (67) and a second end (78b) facing rear, located to the rear of the aft cross structure (60) and/or positioned to vent any escaped hydrogen gas to the rear of the vessel (1).

12. The SWATH vessel (1) of any preceding claim, wherein the fore cross structure (50) includes a plurality of compartments (53) including median compartments (56) or outer compartments (54) that are a battery compartment (57) and a central compartment (58) that is an electrical systems compartment (59); and/or
wherein only the aft cross structure (60) contains a fuel cell (101).

13. The SWATH vessel (1) of any one of claims 7 to 12, wherein the fore cross-structure (50) and/or aft cross-structure (60) are connectable to a mast (70) at or near the electrical systems compartment (59, 69); and/or
wherein the fore cross structure (50) and aft cross structure (60) include, a base (80), a plurality of external walls (82) and structural bulkheads (65) between the compartments (53, 64); and wherein said compartments (53, 64) contain racks (84) for receiving the fuel cells (101), batteries (102) and/or electrical equipment (104); said racks (84) structurally connected to at least the base (80) and a bulkhead (54, 65) and or external wall (82) by a plurality of resilient mountings (86); and
said fuel cells (101), batteries (200) and/or electrical equipment (300) releasably mounted in said racks (84); and/or
wherein the plurality of struts (20) comprises a first strut (20a) reversibly connected to the first lower hull (11) toward the front end (2), a second strut (20b) reversibly connected to the second lower hull (12) toward the front end (2), a third strut (20c) reversibly connected to the lower hull (11) toward the rear end (4) and a fourth strut (20d) reversibly connected to the second lower hull (12) toward the rear end (4) of the vessel (1).

14. The SWATH vessel (1) of any preceding claim, wherein the deck structure (90) includes two or more longitudinal reinforcement members (92) extending between the fore cross structure (50) and aft structure (60); and optionally two or more lateral reinforcement members (94) extending between said longitudinal reinforcement members (92).

15. The SWATH vessel (1) of any preceding claim, wherein the deck structure (90) defines an aperture (96) through which machinery (106) may operate or across which a reinforcing structure (98) may be attached; and optionally wherein:
the machinery (106) or reinforcing structure (98) is structurally attached to the longitudinal reinforcement members (92) and optionally the lateral support members (94) and/or the fore and aft cross structures (50, 60) for providing increased tortional rigidity to the vessel (1); or
wherein the deck structure (90) further includes decking (95) fixed to the reinforcement members (92, 94) and optionally the cross structures (50, 60) for increasing rigidity.

16. An Autonomous vessel (1) comprising the vessel (1) of any of claims 1 to 15.

## Patentansprüche

1. Wasserstoffbetriebenes, modulares Doppelrumpf-Wasserfahrzeug mit kleiner Wasserlinienfläche (SWATH-Wasserfahrzeug) (1), das ein vorderes Ende (2) und ein hinteres Ende (4) sowie eine mittlere vertikale Längsebene A aufweist; wobei das Wasserfahrzeug (1) eine Mehrzahl modularer Wasserfahrzeugkomponenten (3) umfasst, die Folgendes aufweisen:
einen sich in Längsrichtung erstreckenden, auftriebsfähigen, tauchfähigen ersten unteren Rumpf (11) und einen sich in Längsrichtung erstreckenden, auftriebsfähigen, tauchfähigen zweiten unteren Rumpf (12) zur Aufnahme eines oder mehrerer Brennstofftanks (100);
eine Mehrzahl von Streben (20), die jeweils reversibel mit einem von dem besagten ersten Rumpf (11) und dem besagten zweiten Rumpf (12) verbunden sind;
eine vordere Querstruktur (50), reversibel verbunden mit einer Strebe (20), die mit dem ersten unteren Rumpf (11) verbunden ist, und die vordere Querstruktur (50) reversibel verbunden mit einer Strebe (20), die mit dem zweiten unteren Rumpf (12) verbunden ist;
eine hintere Querstruktur (60), reversibel verbunden mit einer Strebe (20), die mit dem ersten unteren Rumpf (11) verbunden ist, und die hintere Querstruktur (60) reversibel verbunden mit einer Strebe (20), die mit dem zweiten unteren Rumpf (12) verbunden ist; und
eine Deckstruktur (90), reversibel verbunden zwischen der vorderen Querstruktur (50) und der hinteren Querstruktur (60).

2. SWATH-Wasserfahrzeug (1) nach Anspruch 1, wobei jeder der unteren Rümpfe (11, 12) eine Außenhaut (14) mit einer Innenfläche (16) und einer Außenfläche (17), eine Mehrzahl von sich in Umfangsrichtung erstreckenden Verstärkungselementen (18), die mit der Innenfläche (16) jedes unteren Rumpfes (11, 12) verbunden sind und ein Brennstofftank-Positioniermittel (22) zum Positionieren eines oder mehrerer der Brennstofftanks (100) aufweisen, umfasst; und die besagten Verstärkungselemente (18) im Gebrauch einen Schutzhohlraum (26) zwischen der Außenhaut (14) und einem Brennstofftank (100) definierend; und/oder das Brennstofftank-Positioniermittel (22) ein Reibungsminderungsmittel (24) zum Erleichtern des Einsetzens und Entnehmens von Brennstofftanks (100) aufweisend, optional das Reibungsminderungsmittel (24) ein reibungsminderndes Material (24a) oder einen reibungsmindernden Mechanismus (24b) umfassend.

3. SWATH-Wasserfahrzeug (1) nach einem der vorhergehenden Ansprüche und der erste untere Rumpf (11) und/oder der zweite untere Rumpf (12) ferner aufweisend:
einen hinteren Konus (32), der einen elektrischen Antriebsmotor (34) und Vortriebsmittel (36) enthält; und/oder
einen vorderen Nasenkonus (28), der darin einen weiteren Aufprallschutzhohlraum (30) definiert; und optional
wobei der erste untere Rumpf (11) und/oder der zweite untere Rumpf (12) ein oder mehrere wasser- und gasdichte Schotte (19) aufweisen, die mit der Außenhaut (14) ein Brennstofftankabteil (21) definieren, das von dem besagten vorderen Nasenkonus (28) und/oder hinteren Konus (32) getrennt ist.

4. SWATH-Wasserfahrzeug nach Anspruch 3, wobei das besagte Brennstofftankabteil (21) einen Entlüftungsschlauch (23) mit einem ersten Ende (23a), das mit dem besagten Brennstofftankabteil (21) verbunden ist, und einem zweiten Ende (23b) aufweist, das sich oberhalb der Wasseroberfläche befindet, wenn das Wasserfahrzeug (1) in Gebrauch ist.

5. SWATH-Wasserfahrzeug (1) nach einem der vorhergehenden Ansprüche, wobei die Anordnung der modularen Wasserfahrzeugkomponenten (3, 11, 12, 20, 50, 60, 70) und/oder Antriebskomponenten (34, 36, 200) symmetrisch bezüglich der mittleren Längsebene A ist; und/oder wobei die Wasserfahrzeugkomponenten (3, 11, 12, 20, 50, 60, 70) in voneinander getrenntem Zustand in 2 ISO-Standardcontainer passen.

6. SWATH-Wasserfahrzeug (1) nach einem der Ansprüche 3 bis 5, wobei der erste untere Rumpf (11) und/oder der zweite untere Rumpf (12) einen oder mehrere Verlängerungsabschnitte (40) umfassen, die Querstrahlruder (42) umfassen, wobei die besagten Verlängerungsabschnitte (40) reversibel zwischen dem Brennstofftankabteil (21) und entweder dem vorderen Nasenkonus (28) oder dem hinteren Vortriebskonus (32) verbunden sind.

7. SWATH-Wasserfahrzeug (1) nach einem der vorhergehenden Ansprüche, wobei die hintere Querstruktur (60) eine Mehrzahl von Abteilen (64) aufweist, die jeweils durch ein Schott (65) voneinander getrennt sind, einschließlich mindestens eines Brennstoffzellenabteils (67), eines Batterieabteils (68) und optional eines Abteils für elektrische Systeme (69);
wobei das Brennstoffzellenabteil (67) von den anderen der Mehrzahl von Abteilen (64) durch ein wasserstoffgasdichtes Schott (66) getrennt ist; und optional wobei:
die hintere Querstruktur (60) ferner ein erstes Ende (61) und ein zweites Ende (62), zwei seitlich außen liegende Abteile (72), von denen je eines an dem ersten Ende (61) und an dem zweiten Ende (62) angeordnet ist, und ein zentrales Abteil (76) aufweist, das zwischen den zwei äußeren Abteilen (72) angeordnet ist; wobei die seitlich außen liegenden Abteile (72) jeweils ein Brennstoffzellenabteil (67) sind; und
das zentrale Abteil (76) ein Abteil für elektrische Systeme (69) ist; oder
die hintere Querstruktur (60) ferner ein erstes Ende (61) und ein zweites Ende (62), zwei seitlich außen liegende Abteile (72), von denen je eines an dem ersten Ende (61) und an dem zweiten Ende (62) angeordnet ist, ein zentrales Abteil (76), das am Mittelpunkt M der hinteren Querstruktur (60) angeordnet ist, und zwei Zwischenabteile (74) aufweist, die zwischen dem zentralen Abteil (76) und jedem der äußeren Abteile (72) angeordnet sind;
wobei die äußeren Abteile (72) jeweils ein Brennstoffzellenabteil (67) sind;
die Zwischenabteile (74) jeweils ein Batterieabteil (68) sind; und das zentrale Abteil (68) ein Abteil für elektrische Systeme (69) ist.

8. SWATH-Wasserfahrzeug (1) nach Anspruch 7, wobei die hintere Querstruktur (60) ein gasdichtes Schott (66) zwischen dem Brennstoffzellenabteil (67) und dem Batterieabteil (68) und optional dem Abteil für elektrische Systeme (69) aufweist.

9. SWATH-Wasserfahrzeug (1) nach einem der vorhergehenden Ansprüche, wobei die vordere Querstruktur (50) und/oder die hintere Querstruktur (60) symmetrisch bezüglich der mittleren Ebene A ist, und zwar in dem Maße, dass der Schwerpunkt G jeder dieser Querstrukturen auf oder nahe der mittleren Ebene A liegt.

10. SWATH-Wasserfahrzeug (1) nach einem der Ansprüche 7 bis 9, wobei die Streben (20) an dem oder seitlich außerhalb von dem Schott (65) zwischen dem seitlich außen liegenden Abteil (72) und dem zentralen Abteil (76) oder den Zwischenabteilen (74) reversibel mit einer von der hinteren Querstruktur (60) oder der vorderen Querstruktur (50) verbunden sind.

11. SWATH-Wasserfahrzeug (1) nach einem der Ansprüche 7 bis 10, wobei das Brennstoffzellenabteil (67) der hinteren Querstruktur (60) Entlüftungsrohre (78) aufweist, die ein erstes Ende (78a), das mit dem Brennstoffzellenabteil (67) verbunden ist, und ein zweites Ende (78b) aufweisen, das nach hinten gerichtet, hinter der hinteren Querstruktur (60) angeordnet und/oder so positioniert ist, dass etwaiges entwichenes Wasserstoffgas zum hinteren Bereich des Wasserfahrzeugs (1) abgelassen wird.

12. SWATH-Wasserfahrzeug (1) nach einem der vorhergehenden Ansprüche, wobei die vordere Querstruktur (50) eine Mehrzahl von Abteilen (53) aufweist, einschließlich Zwischenabteilen (56) oder äußeren Abteilen (54), die ein Batterieabteil (57) sind, und eines zentralen Abteils (58), das ein Abteil für elektrische Systeme (59) ist; und/oder
wobei nur die hintere Querstruktur (60) eine Brennstoffzelle (101) enthält.

13. SWATH-Wasserfahrzeug (1) nach einem der Ansprüche 7 bis 12, wobei die vordere Querstruktur (50) und/oder die hintere Querstruktur (60) an oder nahe dem Abteil für elektrische Systeme (59, 69) mit einem Mast (70) verbindbar sind; und/oder
wobei die vordere Querstruktur (50) und die hintere Querstruktur (60) eine Basis (80), eine Mehrzahl von Außenwänden (82) und tragende Schotte (65) zwischen den Abteilen (53, 64) aufweisen; und wobei die besagten Abteile (53, 64) Gestelle (84) zur Aufnahme der Brennstoffzellen (101), Batterien (102) und/oder elektrischen Ausrüstung (104) enthalten; wobei die besagten Gestelle (84) durch eine Mehrzahl elastischer Lagerungen (86) strukturell mit mindestens der Basis (80) und einem Schott (54, 65) und/oder einer Außenwand (82) verbunden sind; und wobei die besagten Brennstoffzellen (101), Batterien (200) und/oder elektrische Ausrüstung (300) lösbar in den besagten Gestellen (84) montiert sind; und/oder
wobei die Mehrzahl von Streben (20) eine erste Strebe (20a), die zum vorderen Ende (2) hin reversibel mit dem ersten unteren Rumpf (11) verbunden ist, eine zweite Strebe (20b), die zum vorderen Ende (2) hin reversibel mit dem zweiten unteren Rumpf (12) verbunden ist, eine dritte Strebe (20c), die zum hinteren Ende (4) hin reversibel mit dem unteren Rumpf (11) verbunden ist, und eine vierte Strebe (20d) umfasst, die zum hinteren Ende (4) des Wasserfahrzeugs (1) hin reversibel mit dem zweiten unteren Rumpf (12) verbunden ist.

14. SWATH-Wasserfahrzeug (1) nach einem der vorhergehenden Ansprüche, wobei die Deckstruktur (90) zwei oder mehr Längsverstärkungsbauteile (92) aufweist, die sich zwischen der vorderen Querstruktur (50) und der hinteren Struktur (60) erstrecken; und optional zwei oder mehr Querverstärkungsbauteile (94) aufweist, die sich zwischen den besagten Längsverstärkungsbauteilen (92) erstrecken.

15. SWATH-Wasserfahrzeug (1) nach einem der vorhergehenden Ansprüche, wobei die Deckstruktur (90) eine Öffnung (96) definiert, durch die eine Maschinenausrüstung (106) arbeiten kann oder über die hinweg eine Verstärkungsstruktur (98) angebracht werden kann; und optional wobei:
die Maschinenausrüstung (106) oder die Verstärkungsstruktur (98) strukturell an den Längsverstärkungsbauteilen (92) und optional den Querstützbauteilen (94) und/oder den vorderen und hinteren Querstrukturen (50, 60) befestigt ist, um dem Wasserfahrzeug (1) eine erhöhte Torsionssteifigkeit zu verleihen; oder
wobei die Deckstruktur (90) ferner einen Deckbelag (95) aufweist, der zur Erhöhung der Steifigkeit an den Verstärkungsbauteilen (92, 94) und optional den Querstrukturen (50, 60) befestigt ist.

16. Autonomes Wasserfahrzeug (1), umfassend das Wasserfahrzeug (1) nach einem der Ansprüche 1 bis 15.

## Revendications

1. Navire (1) modulaire à coques jumelles et à petite surface de flottaison (SWATH), alimenté en combustible hydrogène, présentant une extrémité avant (2) et une extrémité arrière (4) et un plan longitudinal vertical central A ; le navire (1) comprenant une pluralité de composants modulaires de navire (3) incluant :
une première coque inférieure (11) s'étendant longitudinalement, flottante, submersible, et une seconde coque inférieure (12) s'étendant longitudinalement, flottante, submersible, pour contenir un ou plusieurs réservoirs de combustible (100) ;
une pluralité de montants (20) reliés chacun de manière réversible à l'une parmi ladite première coque (11) et ladite seconde coque (12) ;
une structure transversale avant (50) reliée de manière réversible à un montant (20) relié à la première coque inférieure (11) et la structure transversale avant (50) reliée de manière réversible à un montant (20) relié à la seconde coque inférieure (12) ;
une structure transversale arrière (60) reliée de manière réversible à un montant (20) relié à la première coque inférieure (11) et la structure transversale arrière (60) reliée de manière réversible à un montant (20) relié à la seconde coque inférieure (12) ; et
une structure de pont (90) reliée de manière réversible entre la structure transversale avant (50) et la structure transversale arrière (60).

2. Navire SWATH (1) selon la revendication 1, dans lequel chacune des coques inférieures (11, 12) comprend un bordé extérieur (14) présentant une surface intérieure (16) et une surface extérieure (17), une pluralité d'éléments de renfort (18) s'étendant circonférentiellement, reliés à la surface intérieure (16) de chaque coque inférieure (11, 12) et incluant un moyen de positionnement de réservoir de combustible (22) pour positionner un ou plusieurs des réservoirs de combustible (100) ; et
lesdits éléments de renfort (18) définissant un espace vide de protection (26) entre le bordé extérieur (14) et un réservoir de combustible (100) lors de l'utilisation ; et/ou
le moyen de positionnement de réservoir de combustible (22) incluant un moyen de réduction de frottement (24) pour faciliter l'insertion et le retrait de réservoirs de combustible (100), le moyen de réduction de frottement (24) comprenant éventuellement un matériau réducteur de frottement (24a) ou un mécanisme réducteur de frottement (24b).

3. Navire SWATH (1) selon l'une quelconque des revendications précédentes et la première coque inférieure (11) et/ou la seconde coque inférieure (12) incluant en outre :
un cône arrière (32) contenant un moteur électrique d'entraînement (34) et des moyens de propulsion (36) ; et/ou
un cône de nez avant (28) définissant en son sein un espace vide supplémentaire de protection contre les chocs (30) ; et éventuellement
dans lequel la première coque inférieure (11) et/ou la seconde coque inférieure (12) incluent une ou plusieurs cloisons (19) étanches à l'eau et aux gaz définissant avec le bordé extérieur (14) un compartiment de réservoir de combustible (21) séparé dudit cône de nez avant (28) et/ou du cône arrière (32).

4. Navire SWATH selon la revendication 3, dans lequel ledit compartiment de réservoir de combustible (21) inclut un tuyau souple d'évent (23) avec une première extrémité (23a) reliée audit compartiment de réservoir de combustible (21) et une seconde extrémité (23b) située au-dessus de la surface de l'eau lorsque le navire (1) est en cours d'utilisation.

5. Navire SWATH (1) selon l'une quelconque des revendications précédentes, dans lequel l'agencement des composants modulaires de navire (3, 11, 12, 20, 50, 60, 70) et/ou des composants d'entraînement (34, 36, 200) est symétrique par rapport au plan longitudinal central A ; et/ou dans lequel les composants de navire (3, 11, 12, 20, 50, 60, 70) peuvent tenir dans 2 conteneurs ISO standard lorsqu'ils sont déconnectés.

6. Navire SWATH (1) selon l'une quelconque des revendications 3 à 5, dans lequel la première coque inférieure (11) et/ou la seconde coque inférieure (12) comprennent une ou plusieurs parties d'extension (40) comprenant des propulseurs latéraux (42), lesdites parties d'extension (40) étant reliées de manière réversible entre le compartiment de réservoir de combustible (21) et l'un ou l'autre du cône de nez avant (28) et du cône de propulsion arrière (32).

7. Navire SWATH (1) selon l'une quelconque des revendications précédentes, dans lequel la structure transversale arrière (60) inclut une pluralité de compartiments (64) séparés chacun par une cloison (65), incluant au moins un compartiment de pile à combustible (67), un compartiment de batterie (68) et éventuellement un compartiment de systèmes électriques (69) ; dans lequel le compartiment de pile à combustible (67) est séparé des autres compartiments de la pluralité de compartiments (64) par une cloison (66) étanche à l'hydrogène gazeux ; et éventuellement dans lequel :
la structure transversale arrière (60) inclut en outre une première extrémité (61) et une seconde extrémité (62), deux compartiments latéraux (72) situés respectivement à la première extrémité (61) et à la seconde extrémité (62) et un compartiment central (76) situé entre les deux compartiments extérieurs (72) ; dans lequel les compartiments latéraux (72) sont chacun un compartiment de pile à combustible (67) ; et
le compartiment central (76) est un compartiment de systèmes électriques (69) ; ou
la structure transversale arrière (60) inclut en outre une première extrémité (61) et une seconde extrémité (62), deux compartiments latéraux (72) situés respectivement à la première extrémité (61) et à la seconde extrémité (62), un compartiment central (76) situé au point milieu M de la structure transversale arrière (60) et deux compartiments médians (74) situés entre le compartiment central (76) et chacun des compartiments extérieurs (72) ;
dans lequel les compartiments extérieurs (72) sont chacun un compartiment de pile à combustible (67) ;
les compartiments médians (74) sont chacun un compartiment de batterie (68) ; et le compartiment central (68) est un compartiment de systèmes électriques (69).

8. Navire SWATH (1) selon la revendication 7, dans lequel la structure transversale arrière (60) inclut une cloison (66) étanche aux gaz entre le compartiment de pile à combustible (67) et le compartiment de batterie (68) et éventuellement le compartiment de systèmes électriques (69).

9. Navire SWATH (1) selon l'une quelconque des revendications précédentes, dans lequel la structure transversale avant (50) et/ou la structure transversale arrière (60) est symétrique par rapport au plan central A dans une mesure telle que le centre de gravité G de chacune se trouve sur le plan central A ou à proximité de celui-ci.

10. Navire SWATH (1) selon l'une quelconque des revendications 7 à 9, dans lequel les montants (20) sont reliés de manière réversible à l'une parmi la structure transversale arrière (60) et la structure transversale avant (50) au niveau ou à l'extérieur de la cloison (65) entre le compartiment latéral (72) et le compartiment central (76) ou les compartiments médians (74).

11. Navire SWATH (1) selon l'une quelconque des revendications 7 à 10, dans lequel le compartiment de pile à combustible (67) de la structure transversale arrière (60) inclut des conduites d'évent (78) ayant une première extrémité (78a) reliée au compartiment de pile à combustible (67) et une seconde extrémité (78b) orientée vers l'arrière, située à l'arrière de la structure transversale arrière (60) et/ou positionnée pour évacuer vers l'arrière du navire (1) tout hydrogène gazeux qui se serait échappé.

12. Navire SWATH (1) selon l'une quelconque des revendications précédentes, dans lequel la structure transversale avant (50) inclut une pluralité de compartiments (53) incluant des compartiments médians (56) ou des compartiments extérieurs (54) qui sont un compartiment de batterie (57) et un compartiment central (58) qui est un compartiment de systèmes électriques (59) ; et/ou
dans lequel seule la structure transversale arrière (60) contient une pile à combustible (101).

13. Navire SWATH (1) selon l'une quelconque des revendications 7 à 12, dans lequel la structure transversale avant (50) et/ou la structure transversale arrière (60) peuvent être reliées à un mât (70) au niveau ou à proximité du compartiment de systèmes électriques (59, 69) ; et/ou
dans lequel la structure transversale avant (50) et la structure transversale arrière (60) incluent une base (80), une pluralité de parois externes (82) et des cloisons structurelles (65) entre les compartiments (53, 64) ; et dans lequel lesdits compartiments (53, 64) contiennent des bâtis (84) pour recevoir les piles à combustible (101), les batteries (102) et/ou les équipements électriques (104) ; lesdits bâtis (84) étant reliés structurellement au moins à la base (80) et à une cloison (54, 65) et/ou à une paroi externe (82) par une pluralité de supports élastiques (86) ; et lesdites piles à combustible (101), lesdites batteries (200) et/ou lesdits équipements électriques (300) étant montés de manière amovible dans lesdits bâtis (84) ; et/ou
dans lequel la pluralité de montants (20) comprend un premier montant (20a) relié de manière réversible à la première coque inférieure (11) vers l'extrémité avant (2), un deuxième montant (20b) relié de manière réversible à la seconde coque inférieure (12) vers l'extrémité avant (2), un troisième montant (20c) relié de manière réversible à la coque inférieure (11) vers l'extrémité arrière (4) et un quatrième montant (20d) relié de manière réversible à la seconde coque inférieure (12) vers l'extrémité arrière (4) du navire (1).

14. Navire SWATH (1) selon l'une quelconque des revendications précédentes, dans lequel la structure de pont (90) inclut au moins deux organes de renfort longitudinaux (92) s'étendant entre la structure transversale avant (50) et la structure arrière (60) ; et éventuellement au moins deux organes de renfort latéraux (94) s'étendant entre lesdits organes de renfort longitudinaux (92).

15. Navire SWATH (1) selon l'une quelconque des revendications précédentes, dans lequel la structure de pont (90) définit une ouverture (96) à travers laquelle une machinerie (106) peut fonctionner ou en travers de laquelle une structure de renfort (98) peut être fixée ; et éventuellement dans lequel :
la machinerie (106) ou la structure de renfort (98) est fixée structurellement aux organes de renfort longitudinaux (92) et éventuellement aux organes de support latéraux (94) et/ou aux structures transversales avant et arrière (50, 60) pour conférer une rigidité en torsion accrue au navire (1) ; ou
dans lequel la structure de pont (90) inclut en outre un platelage (95) fixé aux organes de renfort (92, 94) et éventuellement aux structures transversales (50, 60) pour augmenter la rigidité.

16. Navire autonome (1) comprenant un navire (1) selon l'une quelconque des revendications 1 à 15.
